# EUROPÄISCHE PATENTSCHRIFT

(11) **EP 1 400 418 B1**
(45) Veröffentlichungstag und Bekanntmachung des Hinweises auf die Patenterteilung: **14.11.2012**
(21) Anmeldenummer: 03019041.7
(22) Anmeldetag: 22.08.2003
(51) Int. Cl.: B60R 22/40, G01P 15/03

(54) **Betätigungseinrichtung für einen Sperrmechanismus**
Actuating device for a locking mechanism
Système d'actionnement pour un mécanisme de blocage

(30) Priorität: 23.09.2002 DE 10244294; 28.05.2003 DE 10324226
(43) Veröffentlichungstag der Anmeldung: 24.03.2004
(73) Patentinhaber: Volkswagen Aktiengesellschaft, 38440 Wolfsburg (DE)
(72) Erfinder: Jahr, Michael, Dr., 38442 Wolfsburg (DE); Gauding, Jens, 37688 Beverungen (DE); Dachrodt, Berthold, 38465 Brome (DE)

(56) Entgegenhaltungen:
- EP-A- 0 364 957
- FR-A- 2 796 156
- GB-A- 1 357 369
- US-A- 4 015 796
- US-A- 4 101 093
- US-A- 4 619 417
- US-A- 5 251 843
- US-B1- 6 247 365

## Beschreibung

Die Erfindung betrifft eine Betätigungseinrichtung mit einer seismischen Masse gemäß dem Oberbegriff des Patentanspruchs 1.

Eine gattungsgemäße Sperreinrichtung ist aus der US 5 251 843 A bekannt. Die Sperreinrichtung zeigt eine als seismische Masse ausgebildete Kugel, die in einer Mulde aufgenommen ist. Auf der Kugel liegt eine Kappe auf, die einen Teil eines Sensorhebels darstellt. Der Sensorhebel ist einseitig drehbar gelagert, wobei die Lagerung elastisch ausgebildet ist. Konkret ist das Lager gehäuseseitig an einem Hebelarm befestigt der Schwingungen aufnehmen kann. Unter der Wirkung der im Fahrbetrieb auf die Kugel übertragenen Erschütterungen wird der Sensorhebel elastisch ausgelenkt. Weiterhin ist die DE 28 21 152 bekannt. Diese beinhaltet eine Aufwickelvorrichtung für Sicherheitsgurte mit einer durch eine seismische Masse auslösbaren, das Abwickeln des Gurtbandes verhindernden Sperrvorrichtung. Durch Sperrung der Abwickelvorrichtung ist die gesicherte Person in ihrer Bewegungsfreiheit verhältnismäßig stark eingeschränkt. Anders ausgelegte Abwickelvorrichtungen ermöglichen zwar prinzipiell eine bestimmte Bewegungsfreiheit des Gesicherten, neigen aber bei Schwingungen und Rüttelbewegungen leicht zu einer unerwünschten Arretierung des Gurtbandes. Eine solche unerwünschte Arretierung wird auch als Fehlauslösung bezeichnet. Dieses kann bei Fahrzeugen verstärkt zu Problemen führen, wenn die Betätigungseinrichtung, die wie ein Sensor wirkt, nicht wie üblich an der Fahrzeugkarosserie, sondern an einem stärker schwingenden Bauteil, wie z. B. einem Fahrzeugsitz, angebracht ist.

Der Erfindung liegt die Aufgabe zugrunde, eine Betätigungseinrichtung so auszulegen, dass sie auch bei Applikation an einem mit Schwingungen beaufschlagten Bauteil, beispielsweise einer Rückenlehne eines Fahrzeugsitzes, zwar gewollt bei Abbrems- oder Beschleunigungsvorgängen und infolge einer Schräglage auslöst, aber bei Rüttel- und Schwingbewegungen nicht zu Fehlauslösungen neigt.

Diese Aufgabe wird gelöst mit einer Betätigungseinrichtung gemäß Patentanspruch 1. Vorteilhafte Weiterbildungen der Erfindungsvarianten sind in den jeweiligen Unteransprüchen angegeben.

Als erste Lösungsvariante weist die Betätigungseinrichtung bzw. Sensoreinrichtung eine seismische Masse aus, der eine Tilgermasse zugeordnet ist. Die seismische Masse ist in einer Aufnahme angeordnet und wird aus einer Ruheposition heraus, in der die Sensoreinrichtung nicht aktiviert ist, durch Beschleunigungskräfte in eine Position bewegt, in der die Sensoreinrichtung auslöst. Die Aufnahme weist zwei zueinander parallel angeordnete Ebenen aus, wobei die obere Ebene über ein an ihrem Ende befestigtes Scharnier schwenkbar gelagert ist und wobei zumindest die untere Ebene über eine dreidimensionale Vertiefung verfügt, deren tiefster Punkt als Mittelpunktslage der seismischen Masse bezeichnet wird und die Ruhelage der seismischen Masse darstellt. Die Seitenflächen der Vertiefung können als schiefe Ebene oder konkave Flächen ausgebildet sein. Vorzugsweise ist der untere Teil der Aufnahme, auf der die seismische Masse aufliegt, als eine Pfanne bzw. Kugelkalotte ausgebildet, aus der die seismische Masse durch Roll- oder Gleitbewegungen in eine höhere Position überführt wird. Dadurch wird der obere Teil der Aufnahme angehoben und löst einen Mechanismus aus.

In einer vorteilhaften Ausführung ist die seismische Masse ein Hohlkörper, der über Gleit-, Rutsch- oder Rollbewegungen aus der Mittelpunktslage herausbewegt wird. In einem bevorzugten Ausführungsbeispiel wird der Hohlkörper als Hohlkugel ausgelegt, in deren Innenraum die Tilgermasse angeordnet ist.

Die Tilgermasse kann aus einer Flüssigkeit, einem Festkörper oder aus einer Kombination von einer Flüssigkeit und einem Festkörper bestehen.

Für eine als Festkörper ausgeführte Tilgermasse kann ein ein- oder mehrteiliger Aufbau vorgesehen sein. Die Geometrie der Teile kann sich von rundlichen bzw. elliptischen bis zu polyedrischen Formen erstrecken. Eine einteilige Tilgermasse kann beispielsweise als Kugel ausgebildet sein. Für mehrteilige Tilgermassen ist Sand als relativ günstiges, natürlich vorkommendes Produkt vorstellbar. Ebenso sind aber auch künstlich erzeugte Formen möglich.

In einer weiteren vorteilhaften Ausführung kann die Tilgermasse neben den ein- oder mehrteiligen Festkörpern eine im flüssigen Aggregatzustand vorliegende Tilgermasse beinhalten, die den Reibungskoeffizienten zwischen den festen Teilen der Tilgermasse oder der festen Tilgermasse und dem Hohlkörper so auslegt, dass für den Sensor eine optimale Auslösecharakteristik eingestellt werden kann. Außerdem kann das Dämpfungsverhalten der Tilgermasse durch Veränderung der Mengenanteile an flüssiger und fester Tilgermasse variiert werden.

Der im flüssigen Aggregatzustand vorliegende Teil der Tilgermasse kann aus einer Flüssigkeit oder einem Flüssigkeitsgemisch bestehen, das ein- oder mehrphasig ausgebildet ist. Dieser Teil der Tilgermasse kann flüssig, viskos bis gelförmig vorliegen.

Um die kinetische Energie optimal abzubauen, weist die Hohlkugel einen durch den festen Anteil der Tilgermasse herbeigeführten Füllungsgrad auf, der dem festen Teil der Tilgermasse Abroll- und/oder Fallvorgänge ermöglicht.

Der nicht von der Tilgermasse eingenommene verbleibende Hohlraum der Hohlkugel wird dann durch ein ergänzendes Medium eingenommen, das als Gas oder Gasgemisch - im allgemeinen Luft - ausgebildet ist. Der verbleibende Hohlraum kann auch als Vakuum vorliegen. Ist eine im flüssigen Aggregatzustand vorliegende Tilgermasse vorhanden, so kann diese den Hohlraum auch vollständig ausfüllen.

Gemäß einer Weiterbildung der Erfindung kann durch Veränderung der jeweiligen Oberfläche der seismischen Masse und des Haltebereichs der seismischen Masse oder durch Veränderung beider Oberflächen ein auf die seismische Masse dämpfender Einfluss erzielt werden. Der Haltebereich besteht aus der unteren Aufnahme oder einem zusätzlichen Einsatzteil, das in die Aufnahme eingefügt wird. Unter der seismischen Masse kann die massive Ausführung ohne Tilgermasse zum Beispiel als Kugel oder dessen Hohlkörper mit integrierter Tilgermasse verstanden werden. Die Tilgermasse kann dann zusätzlich dämpfend wirken. Durch Beschichtung der Oberfläche der seismischen Masse und/oder der Aufnahme können günstige Eigenschaften erzielt werden, die z.B. zur Veränderung des Reibkoeffizienten führen oder eine statische Aufladung des Hohlkörpers vermeiden. Eine Erhöhung des Reibkoeffizienten kann aber auch durch eine entsprechende Oberflächenbearbeitung erzeugt werden.

Zusätzlich können in den Haltebereich zur Führung der Kugel in einer vorbestimmten Laufbahn dienende Vertiefungen oder Erhöhungen eingearbeitet sein. Von konvex ausgebildeten Erhöhungen rollt die Kugel wieder in ihre vorbestimmte Laufbahn zurück. Die Erhöhungen können aber auch als Leitblanken vorliegen. Entsprechende Vertiefungen führen die Kugel in einer festgelegten Laufbahn.

In vorteilhafter Weise sind die beiden Erfindungen auch miteinander kombinierbar.

Ein bevorzugtes Ausführungsbeispiel der Erfindung ist nachfolgend anhand der Zeichnung näher erläutert. Es zeigt:

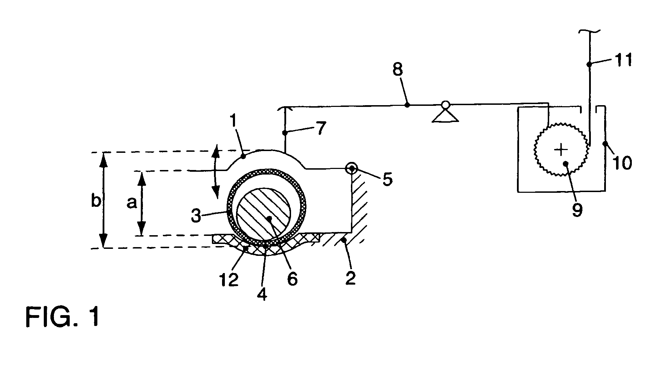

- Fig. 1:: Eine als Hohlkugel ausgeführte seismische Masse mit innenliegender Tilgermasse und einem in die Aufnahme eingefügten Einsatzteil.

Man erkennt in Fig. 1 eine bevorzugte Ausführung der Betätigungseinrichtung für den Anwendungsfall als Sperrvorrichtung in einem Rückhaltesystem. Die sich in einer Aufnahme, gebildet durch eine obere Pfanne 1 und eine untere Pfanne 2, befindende Hohlkugel 3 liegt in der Mittelpunktslage 4 der unteren Pfanne 2. Die obere Pfanne 1 ist in einem Scharnier 5 in vertikale Richtung schwenkbar gelagert. In die untere Pfanne 2 ist hier ein Einsatzteil 12 eingefügt, das gegenüber der unteren Pfanne 2 eine Oberfläche mit erhöhtem Reibkoeffizienten aufweist.

Die Hohlkugel 3 beinhaltet eine weitere massiv ausgeführte Kugel 6, die bewusst in einem Radienverhältnis von 1:a bezogen auf die Hohlkugel 3 ausgeführt ist, wobei a die Werte 1,1 bis 5 annehmen kann. Wird die Hohlkugel 3 aus der Mittelpunktslage 4 herausbewegt, so hebt sie aufgrund des gegenüber dem Abstand b kleineren Abstandes a die obere Pfanne 1 an, die dann ihrerseits einen Taster 7 anhebt. Dieser Taster bewegt demzufolge eine Wippe 8 so, dass ihr gegenüberliegendes Ende in einen Sperrmechanismus 9 eines nur schematisch dargestellten Gurtaufrollautometen 10 eingreift und darüber das Gurtband 11 arretiert.

## Patentansprüche

1. Betätigungseinrichtung für einen Sperrmechanismus (9) mit einer seismischen Masse (3,6), die in einer Aufnahme (1,2) aus einer Ruheposition heraus, in der der Sperrmechanismus (9) unwirksam ist, in eine die Aktivierung des Sperrmechanismus (9) bewirkende Sperrposition bewegbar ist, **dadurch gekennzeichnet, dass** der seismischen Masse (3) eine Tilgermasse (6) zugeordnet ist.

2. Betätigungseinrichtung nach Anspruch 1, **dadurch gekennzeichnet, dass** die seismische Masse (3) aus einem Hohlkörper gebildet ist, in dessen Innenraum die Tilgermasse (6) angeordnet ist.

3. Betätigungseinrichtung nach Anspruch 2, **dadurch gekennzeichnet, dass** der Hohlkörper nur teilweise von der Tilgermasse (6) gefüllt ist.

4. Betätigungseinrichtung nach wenigstens einem der Ansprüche 1 bis 3, **dadurch gekennzeichnet, dass** der Hohlkörper als Hohlkugel (3) ausgebildet ist:

5. Betätigungseinrichtung nach einem der Ansprüche 1 bis 4, **dadurch gekennzeichnet, dass** die Tilgermasse mehrteilig ist.

6. Betätigungseinrichtung nach wenigstens einem der Ansprüche 1 bis 5, **dadurch gekennzeichnet, dass** die Tilgermasse aus einem Stoff im festen und einem Stoff im flüssigen Aggregatzustand zusammengesetzt ist.

7. Betätigungseinrichtung nach Anspruch 1, **dadurch gekennzeichnet, dass** ein die seismische Masse (3,6) in der Ruheposition aufnehmender Haltebereich gegenüber übrigen Oberflächenteilen der Aufnahme (1,2) eine Oberfläche mit einem erhöhten Reibkoeffizienten hat.

8. Betätigungseinrichtung nach Anspruch 2 und/oder 7, **dadurch gekennzeichnet, dass** die seismische Masse beschichtet ist.

9. Betätigungseinrichtung nach Anspruch 7, **dadurch gekennzeichnet, dass** der Haltebereich mit einer reibungserhöhenden Beschichtung versehen ist.

10. Betätigungseinrichtung nach Anspruch 7, **dadurch gekennzeichnet, dass** der Haltebereich eine den Reibkoeffizienten erhöhende Oberflächenbearbeitung aufweist.

11. Betätigungseinrichtung nach Anspruch 1 und/oder 7, **dadurch gekennzeichnet, dass** der Haltebereich zur Führung der Kugel dienende Vertiefungen oder Erhöhungen aufweist.

12. Betätigungseinrichtung nach wenigstens einem der Ansprüche 1 bis 11, dadurch gekenntzeichnet, **dass** die Betätigungseinrichtung in einem Rückhaltesystem eingesetzt wird.

## Claims

1. Actuating device for a locking mechanism (9) with a seismic mass (3, 6) which can be moved in a receptacle (1, 2) out of a position of rest, in which the locking mechanism (9) is inactive, into a locking position causing the actuation of the locking mechanism (9), **characterized in that** the seismic mass (3) is assigned a shock absorber mass (6).

2. Actuating device according to Claim 1, **characterized in that** the seismic mass (3) is formed from a hollow body in the inner space of which the shock absorber mass (6) is arranged.

3. Actuating device according to Claim 2, **characterized in that** the hollow body is filled only partially by the shock absorber mass (6).

4. Actuating device according to at least one of Claims 1 to 3, **characterized in that** the hollow body is designed as a hollow sphere (3).

5. Actuating device according to one of Claims 1 to 4, **characterized in that** the shock absorber mass is multi-part.

6. Actuating device according to at least one of Claims 1 to 5, **characterized in that** the shock absorber mass is composed of a substance in the solid state of aggregation and a substance in the liquid state of aggregation.

7. Actuating device according to Claim 1, **characterized in that** a holding region receiving the seismic mass (3, 6) in the position of rest has a surface with an increased coefficient of friction, as compared with the other surface parts of the receptacle (1, 2).

8. Actuating device according to Claim 2 and/or 7, **characterized in that** the seismic mass is coated.

9. Actuating device according to Claim 7, **characterized in that** the holding region is provided with a friction-increasing coating.

10. Actuating device according to Claim 7, **characterized in that** the holding region has surface machining which increases the coefficient of friction.

11. Actuating device according to Claim 1 and/or 7, **characterized in that** the holding region has depressions or elevations serving for guiding the sphere.

12. Actuating device according to at least one of Claims 1 to 11, **characterized in that** the actuating device is used in a restraint system.

## Revendications

1. Système d'actionnement pour un mécanisme de blocage (9) comprenant une masse sismique (3, 6) qui peut être déplacée dans un logement (1, 2) depuis une position de repos dans laquelle le mécanisme de blocage (9) n'est pas actif, dans une position de blocage provoquant l'activation du mécanisme de blocage (9), **caractérisé en ce que** la masse sismique (3) est associée à une masse d'amortissement (6).

2. Système d'actionnement selon la revendication 1, **caractérisé en ce que** la masse sismique (3) est formée d'un corps creux dans l'espace interne duquel est disposée la masse d'amortissement (6).

3. Système d'actionnement selon la revendication 2, **caractérisé en ce que** le corps creux n'est que partiellement rempli par la masse d'amortissement (6).

4. Système d'actionnement selon au moins l'une quelconque des revendications 1 à 3, **caractérisé en ce que** le corps creux est réalisé sous forme de bille creuse (3).

5. Système d'actionnement selon l'une quelconque des revendications 1 à 4, **caractérisé en ce que** la masse d'amortissement est en plusieurs parties.

6. Système d'actionnement selon au moins l'une quelconque des revendications 1 à 5, **caractérisé en ce que** la masse d'amortissement est constituée d'une substance à l'état physique solide et d'une substance à l'état physique liquide.

7. Système d'actionnement selon la revendication 1, **caractérisé en ce qu'**une région de retenue recevant la masse sismique (3, 6) dans la position de repos présente, par rapport aux autres parties de surface du logement (1, 2), une surface ayant un coefficient de friction plus élevé.

8. Système d'actionnement selon la revendication 2 et/ou 7, **caractérisé en ce que** la masse sismique est revêtue.

9. Système d'actionnement selon la revendication 7, **caractérisé en ce que** la région de retenue est pourvue d'un revêtement augmentant les frottements.

10. Système d'actionnement selon la revendication 7, **caractérisé en ce que** la région de retenue présente un traitement de surface augmentant le coefficient de friction.

11. Système d'actionnement selon la revendication 1 et/ou 7, **caractérisé en ce que** la région de retenue présente des renfoncements ou des rehaussements pour guider la bille.

12. Système d'actionnement selon au moins l'une quelconque des revendications précédentes 1 à 11, **caractérisé en ce que** le système d'actionnement est utilisé dans un système de retenue.
